# EUROPÄISCHE PATENTANMELDUNG

(11) **EP 4 666 822 A1**
(43) Veröffentlichungstag der Anmeldung: **24.12.2025**
(21) Anmeldenummer: 25179161.2
(22) Anmeldetag: 27.05.2025
(51) Int. Cl.: A01B 63/00, A01B 76/00, A01C 7/10, A01C 21/00, A01M 7/00

(54) **VERFAHREN ZUR ERKENNUNG DES AKTUELLEN ZUSTANDES EINER LANDWIRTSCHAFTLICHEN MASCHINE**

(30) Priorität: 05.06.2024 DE 102024115640
(71) Anmelder: Amazonen-Werke H. Dreyer SE & Co. KG, 49205 Hasbergen (DE)
(72) Erfinder: DR. RAHE, Florian, 49205 Hasbergen-Gaste (DE)
(74) Vertreter: Heisel, Per-Christian

(57) **Zusammenfassung**

Die Erfindung betrifft ein Verfahren zur Erkennung des aktuellen Zustandes einer landwirtschaftlichen Maschine (1), mit den Schritten: Erfassen von sich auf die Position der landwirtschaftlichen Maschine (1) beziehende Positionsdaten (P_{n,t}, P_{n+1,t+1}, ...) eines globalen Navigationssatellitensystems (GNSS) samt zugehöriger Zeitpunkte mittels einer Empfängereinheit, Speichern der erfassten Positionsdaten (P_{n,t}, P_{n+1,t+1}, ...) samt den zugehörigen Zeitpunkten (t) in einem Speicher, Auslesen gespeicherter Positionsdaten (P_{n,t}, P_{n+1,t+1}, ...) samt den zugehörigen Zeitpunkten (t) aus dem Speicher mittels einer Recheneinheit, Erstellen von Zustandsvektoren (Q_{m,v}, Q_{m+1,v+1} ...) mittels der Recheneinheit, um die relative Positionsveränderung (m) und die Fahrtgeschwindigkeit (v) der landwirtschaftlichen Maschine (1) zu beschreiben, und Klassifizieren der erstellten Zustandsvektoren (Q_{m,v,k}, Q_{m+1,v+1,k+1} ...) mittels der Recheneinheit.

## Beschreibung

Die Erfindung betrifft ein Verfahren zur Erkennung des aktuellen Zustandes einer landwirtschaftlichen Maschine.

Heutzutage ist der Landwirt nicht nur mit einer Reihe von Vorschriften und Auflagen belegt, die es zu erfüllen gilt, sondern auch mit Optimierungsaufgaben, um seinen Betrieb wirtschaftlich zu gestalten.

Zu diesen Vorschriften und Optimierungsaufgaben zählen beispielsweise eine Dokumentationspflicht des Landwirts für ausgebrachtes Streugut sowie eine Optimierung von Maschinenbewegungen auf z. B. einem Feld, um Treibstoff und/oder Saatgut und/oder Streugut und/oder Dünger zu sparen.

Des Weiteren ist es ein Ziel von Herstellern von landwirtschaftlichen Maschinen, diese zur Zufriedenheit für den jeweiligen Landwirt zu gestalten.

Vor diesem Hintergrund ist es Aufgabe der vorliegenden Erfindung, ein Verfahren zur Erkennung des aktuellen Zustandes einer landwirtschaftlichen Maschine anzugeben, welches kostengünstig und materialsparend betreibbar ist sowie dem Landwirt beim Einhalten von Vorschriften und/oder bei der Optimierung von zu erfüllenden Aufgaben unterstützt. Ferner ist es Aufgabe der vorliegenden Erfindung, Ausfälle einer landwirtschaftlichen Maschine zu minimieren.

Diese Aufgaben werden durch den Gegenstand des Anspruchs 1 gelöst. Weitere vorteilhafte Weiterbildungen sind Gegenstand der Unteransprüche.

Ein Aspekt der vorliegenden Erfindung betrifft ein Verfahren zur Erkennung des aktuellen Zustandes einer landwirtschaftlichen Maschine.

Das Verfahren weist als ersten Schritt ein Erfassen von sich auf die Position der landwirtschaftlichen Maschine beziehende Positionsdaten eines globalen Navigationssatellitensystems, auch GNSS genannt, samt zugehöriger Zeitpunkte, vorzugsweise mittels einer Empfängereinheit, auf. Somit ist also die Position der landwirtschaftlichen Maschine zu einem bestimmten Zeitpunkt bekannt.

Das Erfassen kann kontinuierlich oder fortlaufend durchgeführt werden. Somit können z. B. Positionsdaten permanent oder in zeitlichen Abständen erfasst werden.

Das Erfassen kann, z. B. nur, im Betrieb der landwirtschaftlichen Maschine durchgeführt werden. Somit ist die anfallende Datenmenge reduzierbar.

Zudem kann das Erfassen mehrmals pro Sekunde durchgeführt werden. Auf diese Weise ist eine sehr genaue Bestimmung bzw. Erfassung der Position der landwirtschaftlichen Maschine möglich.

Außerdem kann das Erfassen wenigstens 30 mal pro Sekunde oder 50 mal pro Sekunde oder sogar noch häufiger durchgeführt werden. Somit ist die Genauigkeit der Position zu bestimmten Zeitpunkten erhöhbar.

Ferner können die Positionsdaten die Positionen der landwirtschaftlichen Maschine zu den zugehörigen Zeitpunkten wiedergeben. Somit sind also für unterschiedliche Zeitpunkte die entsprechenden Orte bzw. Positionen der landwirtschaftlichen Maschine bekannt.

Auch können die Positionsdaten Koordinaten in zwei und/oder drei Raumrichtungen umfassen.

Als weiteren Schritt weist das Verfahren ein Speichern der erfassten Positionsdaten samt den zugehörigen Zeitpunkten in einem Speicher auf.

Daraufhin schließt sich als Verfahrensschritt ein Auslesen gespeicherter Positionsdaten samt den zugehörigen Zeitpunkten aus dem Speicher an.

Beim Auslesen können Positionsdaten samt den zugehörigen Zeitpunkten für einen festlegbaren Zeitraum ausgelesen werden, um alle oder lediglich die Positionsdaten samt den zugehörigen Zeitpunkten im festlegbaren Zeitraum weiterzuverarbeiten.

Somit kann die zu verarbeitende Datenmenge reduziert werden oder Verarbeitungsprozesse über eine Recheneinheit, wie z. B. eine CPU, beschleunigt werden. Auch kann die zu verarbeitende Datenmenge an die Leistung einer Recheneinheit und/oder die verfügbare Bandbreite eines Bussystems angepasst sein, um die Recheneinheit bzw. das Bussystem nicht zu überlasten und/oder um Ergebnisse zeitnah zu erhalten.

Der festlegbare Zeitraum kann eine Zeitspanne von 5 bis 8 Minuten oder von 7 Minuten umfassen. Vorstellbar sind auch größere oder kleine Zeitspannen. Dies ist z. B. abhängig von der Leistungsfähigkeit einer Recheneinheit, der verfügbaren Bandbreite eines Bussystems und/oder von sinnvoll zu betrachtenden Zeiträumen.

Als weiteren Schritt weist das Verfahren ein Erstellen von Zustandsvektoren auf, um die relative Positionsveränderung und die Fahrtgeschwindigkeit der landwirtschaftlichen Maschine zu beschreiben.

Dabei kann jeder Zustandsvektor mehrere Komponenten umfassen.

Auch kann jeder Zustandsvektor eine erste Komponente für die relative Positionsveränderung, z. B. der landwirtschaftlichen Maschine, und eine zweite Komponente für die Fahrtgeschwindigkeit, z. B. der landwirtschaftlichen Maschine, aufweisen.

Die erste Komponente jedes Zustandsvektors kann aus zumindest zwei ausgelesenen Positionsdaten errechnet werden. Die Positionsdaten können auch Höhendaten umfassen.

Ferner kann die erste Komponente jedes Zustandsvektors errechnet werden, indem die Differenz der Koordinaten der zwei ausgelesenen Positionsdaten gebildet wird.

Zudem ist es möglich, dass die zwei ausgelesenen Positionsdaten zugehörige Zeitpunkte umfassen, die zeitlich unmittelbar aufeinanderfolgen, oder wobei die zwei ausgelesenen Positionsdaten zeitlich unmittelbar aufeinanderfolgend erfasst wurden.

Die zweite Komponente jedes Zustandsvektors kann aus zugehörigen Zeitpunkten der zwei für die relative Positionsveränderung ausgelesenen Positionsdaten der ersten Komponente jedes Zustandsvektors errechnet werden.

Dabei können die zugehörigen Zeitpunkte zeitlich unmittelbar aufeinanderfolgen.

Auch kann die zweite Komponente jedes Zustandsvektors errechnet werden, indem der Betrag der ersten Komponente des Zustandsvektors bzw. indem der Betrag der für die relative Positionsveränderung ausgelesenen Positionsdaten der ersten Komponente durch die Zeitdifferenz der zugehörigen Zeitpunkte zu den zwei ausgelesenen Positionsdaten der ersten Komponente des Zustandsvektors geteilt wird. Vereinfacht dargestellt, kann die Länge eines Vektors, der zwei Positionen oder Koordinaten miteinander verbindet, durch die Zeit geteilt werden, die die landwirtschaftliche Maschine benötigt hat, um von einer Position zur anderen zu gelangen. Somit kann also die Geschwindigkeit errechnet werden.

Ein weiterer Verfahrensschritt umfasst ein Berechnen einer Krümmung aus der Zusammenschau erstellter Zustandsvektoren.

Beim Berechnen einer Krümmung kann anhand von festlegbaren Parametern wenigstens für zwei oder mehr aufeinanderfolgende Zustandsvektoren auf eine Geradeausfahrt oder auf eine Kurvenfahrt geschlossen werden.

Als weiterer Verfahrensschritt weist das Verfahren ein Zuordnen der berechneten Krümmung zu jedem einzelnen, erstellten Zustandsvektor auf.

Dabei kann jeder erstellte Zustandsvektor eine dritte Komponente für die berechnete Krümmung aufweisen.

Die dritte Komponente kann jeweils einen Wert für die Geradeausfahrt und/oder für die Krümmung umfassen.

Auch kann die dritte Komponente eine positive Krümmung, z. B. eine Linkskurve oder eine Rechtskurve, und/oder eine negative Krümmung, z. B. eine Rechtskurve oder eine Linkskurve, umfassen oder abbilden oder charakterisieren.

Des Weiteren kann eine skalare Größe den Wert des Radius des Krümmungskreises der Krümmung beschreiben. Hierbei kann gelten, je kleiner die skalare Größe ist, desto kleiner ist der Radius, oder umgekehrt.

Zudem kann ein positives Vorzeichen eine positive Krümmung und/oder ein negatives Vorzeichen eine negative Krümmung beschreiben.

Außerdem kann eine Null als skalare Größe eine Geradeausfahrt und/oder eine eins oder ein anderer Wert des Radius des Krümmungskreises der Krümmung als skalare Größe eine Krümmung kennzeichnen.

Ferner weist das Verfahren als weiteren Schritt ein Klassifizieren der erstellten Zustandsvektoren anhand der Krümmung und/oder anhand der Fahrtgeschwindigkeit und/oder anhand der Positionsveränderung und/oder anhand der Positionsdaten und/oder anhand einer erste, zweiten und/oder dritten Komponente der erstellten Zustandsvektoren in Klassen auf. Bei den Klassen kann es sich um nachstehende handeln:
a. landwirtschaftliche Maschine auf einer Straße, z. B. mit einem Prozentanteil an der gesamten Betriebszeit der landwirtschaftlichen Maschine, und/oder
b. landwirtschaftliche Maschine auf einem Feld, z. B. mit einem Prozentanteil an der gesamten Betriebszeit der landwirtschaftlichen Maschine, und/oder
c. landwirtschaftliche Maschine auf einem Vorgewende eines Feldes, z. B. mit einem Prozentanteil an der gesamten Betriebszeit der landwirtschaftlichen Maschine, und/oder
d. landwirtschaftliche Maschine auf einem Hof, z. B. mit einem Prozentanteil an der gesamten Betriebszeit der landwirtschaftlichen Maschine, und/oder
e. landwirtschaftliche Maschine ist gestoppt, z. B. mit einem Prozentanteil an der gesamten Betriebszeit der landwirtschaftlichen Maschine.

In der Folge ist für z. B. die landwirtschaftliche Maschine, welche das oben vorgestellte Verfahren einsetzt, der Verschleiß und/oder sind die Beanspruchungen im Betrieb erfassbar.

Somit können nun z. B. Daten für die Beanspruchung eines Fahrwerks und/oder von in den Boden eingreifenden Werkzeugen und/oder für bevorstehende Ausfälle von Teilen und/oder Baugruppen erhoben werden, um diese beispielsweise rechtzeitig vor dem endgültigen Verschleiß zu ersetzen. Es können auf diese Weise alternativ oder zusätzlich auch Daten über Füllstände von Verbrauchsmaterialien, z. B. von auszubringendem Material, wie Saatgut, Dünger und/oder Pflanzenschutzmittel, erhoben werden.

Des Weiteren erhält ein Hersteller von seinen produzierten landwirtschaftlichen Maschinen ein Feedback, um diese für den jeweiligen Landwirt zu verbessern und/oder optimal zu gestalten und/oder Ersatzteile kurzfristig zur Verfügung zu stellen, um den Betrieb des Landwirts nicht oder nur minimal zu beeinflussen.

Gleichzeitig können Vorschriften und Optimierungsaufgaben, wie z. B. eine Dokumentationspflicht des Landwirts für ausgebrachtes Streugut sowie eine Optimierung von Maschinenbewegungen auf z. B. einem Feld, erfüllt werden, um Treibstoff und/oder Saatgut und/oder Streugut und/oder Dünger zu sparen.

Im Ergebnis dient das Verfahren dazu, kostengünstig eine landwirtschaftliche Maschine zu betreiben und/oder dem Landwirt beim Einhalten von Vorschriften und/oder bei der Optimierung von zu erfüllenden Aufgaben zu unterstützen. Ferner können Ausfälle bzw. Ausfallzeiten einer landwirtschaftlichen Maschine minimiert werden.

Dabei können beim Klassifizieren Kartendaten einbezogen werden, in welchen Positionsdaten oder Koordinaten für Straßen, für Felder und/oder für Höfe gespeichert sind. Somit kann das Klassifizieren erleichtert werden und/oder die klassifizierten Zustandsvektoren können überprüfbar sein und/oder das Klassifizieren kann mit weniger Rechenaufwand, z. B. für eine Recheneinheit, durchgeführt werden.

In einer bevorzugten Ausführungsform des erfindungsgemäßen Verfahrens veranlasst die Recheneinheit bei der Klassifizierung, wonach sich die landwirtschaftliche Maschine auf einer Straße befindet, die Aktivierung von einer oder mehreren Sicherheitsfunktionen der landwirtschaftlichen Maschine. Die eine oder die mehreren Sicherheitsfunktionen können beispielsweise das Verriegeln von Auslegern oder das Aktivieren eines Bremssystems betreffen.

In einer anderen bevorzugten Ausführungsform des erfindungsgemäßen Verfahrens untersucht die Recheneinheit bei der Klassifizierung, wonach sich die landwirtschaftliche Maschine auf einem Feld befindet, ob sich die landwirtschaftliche Maschine in einer Feldeinfahrt befindet. Sofern eine Feldeinfahrt erkannt wird, kann beispielsweise ein Arbeitsmodus oder ein Transportmodus vorbereitet werden. Das Vorbereiten eines Arbeitsmodus kann beispielsweise durch das Ausklappen eines Gestänges oder von Auslegern erfolgen. Das Vorbereiten eines Transportmodus kann beispielsweise durch das Einklappen eines Gestänges oder von Auslegern und/oder das zuvor beschriebene Aktivieren einer Sicherheitsfunktion erfolgen.

Es ist darüber hinaus ein erfindungsgemäßes Verfahren vorteilhaft, bei welchem die landwirtschaftliche Maschine eine Pflanzenschutzspritze ist. In diesem Fall kann die Recheneinheit auf Grundlage einer Klassifizierung beispielsweise ein Anheben oder Absenken des Gestänges veranlassen. Beim Erkennen einer Einfahrt in ein Vorgewende wird beispielsweise das Gestänge der Pflanzenschutzspritze angehoben. Beim Erkennen einer Ausfahrt aus einem Vorgewende wird beispielsweise das Gestänge der Pflanzenschutzspritze abgesenkt. Alternativ oder zusätzlich kann die Recheneinheit auf Grundlage einer Klassifizierung beispielsweise eine Verstärkung oder Verringerung der Gestängedämpfung veranlassen. Beim Erkennen einer Einfahrt in ein Vorgewende wird beispielsweise die Gestängedämpfung der Pflanzenschutzspritze verstärkt. Beim Erkennen einer Ausfahrt aus einem Vorgewende wird beispielsweise die Gestängedämpfung der Pflanzenschutzspritze verringert. Alternativ oder zusätzlich kann die Recheneinheit auf Grundlage einer Klassifizierung beispielsweise eine Anpassung der Förderung von Ausbringflüssigkeit veranlassen. Beim Erkennen einer Feldeinfahrt wird beispielsweise die Förderung von Ausbringmittel gestartet. Beim Erkennen einer Feldausfahrt wird beispielsweise die Förderung von Ausbringmittel gestoppt. Alternativ oder zusätzlich kann die Recheneinheit auf Grundlage einer Klassifizierung beispielsweise eine Hangfahrt erkennen. Beim Erkennen einer Hangfahrt kann die Gestängeneigung im Vorgewende beim Wechsel zwischen Fahrgassen gespiegelt werden.

In einer anderen bevorzugten Ausführungsform des erfindungsgemäßen Verfahrens ist die landwirtschaftliche Maschine ein Düngerstreuer. In diesem Fall kann die Recheneinheit auf Grundlage einer Klassifizierung die Einstellung eines geeigneten Streumodus veranlassen. Beispielsweise wird selbsttätig ein Randstreumodus oder Grenzstreumodus eingestellt. Alternativ oder zusätzlich kann die Recheneinheit auf Grundlage einer Klassifizierung das Aktivieren oder Deaktivieren einer Windkorrektur veranlassen. Beispielsweise wird die Gegenwindkorrektur an der Feldgrenze abgeschaltet, damit nicht über die Feldgrenze geworfen wird. Alternativ oder zusätzlich kann die Recheneinheit auf Grundlage einer Klassifizierung eine Anpassung der Aufgabemenge an Streugut und/oder des Aufgabepunkts des Streuguts auf die Streuscheiben und/oder der Drehzahl der Streuscheiben veranlassen.

Das erfindungsgemäße Verfahren wird ferner dadurch vorteilhaft weitergebildet, dass die landwirtschaftliche Maschine eine Sämaschine ist und die Recheneinheit auf Grundlage einer Klassifizierung eine Anpassung des Schardrucks der Säschare veranlasst. Beispielsweise wird im Vorgewende der Schardruck abgesenkt, damit beim Wiedereinsetzen der ausgehobenen Maschine nicht gegen den Schardruck gearbeitet werden muss. Beim Ausheben der Maschine fallen druckbeaufschlagte Schare nach unten, beim Wiedereinsetzen müssen diese erst zurückgedrückt werden. Somit kann das Wiedereinsetzen und Wiedererreichen der richtigen Sätiefe beschleunigt werden und Beschädigungen können vermieden werden.

Es ist außerdem ein erfindungsgemäßes Verfahren vorteilhaft, bei welchem die landwirtschaftliche Maschine ein Pflug ist und die Recheneinheit auf Grundlage einer Klassifizierung das Wenden des Pflugs veranlasst.

Das Klassifizieren der erstellten Zustandsvektoren erfolgt vorzugsweise anhand der Fahrtgeschwindigkeit und/oder anhand der Positionsveränderung und/oder anhand der Positionsdaten und/oder anhand einer erste, zweiten und/oder dritten Komponente der erstellten Zustandsvektoren.

Außerdem kann das Klassifizieren von einer künstlichen Intelligenz oder von einem Maschinenlern-Modell oder von einem Maschinenlern-Algorithmus durchgeführt werden.

Dabei kann die künstliche Intelligenz oder das Maschinenlern-Modell oder der Maschinenlern-Algorithmus dazu eingerichtet sein, auf Basis der erstellten Zustandsvektoren und auf Basis von Trainingsdaten die erstellten Zustandsvektoren in Klassen zu unterteilen. Bei den Klassen kann es sich um nachstehende handeln:
a. landwirtschaftliche Maschine auf einer Straße, z. B. mit einem Prozentanteil an der gesamten Betriebszeit der landwirtschaftlichen Maschine, und/oder
b. landwirtschaftliche Maschine auf einem Feld, z. B. mit einem Prozentanteil an der gesamten Betriebszeit der landwirtschaftlichen Maschine, und/oder
c. landwirtschaftliche Maschine auf einem Vorgewende eines Feldes, z. B. mit einem Prozentanteil an der gesamten Betriebszeit der landwirtschaftlichen Maschine, und/oder
d. landwirtschaftliche Maschine auf einem Hof, z. B. mit einem Prozentanteil an der gesamten Betriebszeit der landwirtschaftlichen Maschine, und/oder
b. landwirtschaftliche Maschine ist gestoppt z. B. mit einem Prozentanteil an der gesamten Betriebszeit der landwirtschaftlichen Maschine.

Die künstliche Intelligenz oder das Maschinenlern-Modell oder der Maschinenlern-Algorithmus kann vorab oder vorher mit entsprechenden Trainingsdaten für die zu erfüllende Aufgabe trainiert worden sein.

Des Weiteren kann das Verfahren als Schritt eine Auswertung der Anteile der einzelnen Klassen an der gesamten Betriebszeit einer landwirtschaftlichen Maschine umfassen.

Ein weiterer Verfahrensschritt anhand der Auswertung, kann eine Ausgabe und/oder eine Erinnerung an eine Wartung von verschleißbehafteten Teilen und/oder Baugruppen der landwirtschaftlichen Maschine umfassen und/oder eine Erinnerung an das Auffüllen von Verbrauchsmaterialien umfassen.

Dabei kann anhand der Auswertung eine Vorhersage des Verschleißes von Teilen und/oder Baugruppen der landwirtschaftlichen Maschine getroffen werden. Somit können Ausfallzeiten der landwirtschaftlichen Maschine reduziert werden. Alternativ oder zusätzlich kann anhand der Auswertung eine Vorhersage der Notwendigkeit eines Auffüllens von Verbrauchsmaterialien getroffen, um das Auffüllen an einer besonders günstigen Position erledigen zu können, um doppelte Wege zu vermeiden und/oder einen Zeitverlust durch notwendiges Auffüllen zu minimieren.

Auch kann anhand der Auswertung, eine Neuauslegung von verschleißbehafteten Teilen und/oder Baugruppen der landwirtschaftlichen Maschine in Frage kommen. Dies gilt z. B. insbesondere für einen Hersteller von landwirtschaftlichen Maschinen.

Als weiteren Schritt kann das Verfahren ein Zusammenfassen klassifizierter Zustandsvektoren mit Abweichungen innerhalb eines festlegbaren Toleranzbereichs zu einem einzigen Vektor umfassen, sodass die Summe von zusammengefassten Zustandsvektoren Speicherplatz, z. B. in einem Speicher, spart.

Ein weiterer Aspekt der vorliegenden Erfindung betrifft eine landwirtschaftliche Maschine. Es wird ausdrücklich darauf hingewiesen, dass die zuvor genannten einzeln oder miteinander kombinierbar bei der landwirtschaftlichen Maschine Anwendung finden können.

Eine landwirtschaftliche Maschine, wie z. B. eine Sämaschine oder eine Erntemaschine oder ein Feldspritze oder eine Streumaschine oder eine Bodenbearbeitungsmaschine kann zum Ausführen des Verfahrens ausgebildet sein.

Nachstehend wird die Erfindung anhand eines Ausführungsbeispiels in Verbindung mit zugehörigen Zeichnungen näher erläutert. Hierbei zeigen schematisch:
- Fig. 1: eine schematische Darstellung einer Karte mit einem Feld und einer Straße, auf der eine landwirtschaftliche Maschine in Betrieb ist; und
- Fig. 2: eine graphisch aufbereitete Ansicht von prozentualen Anteilen an der gesamten Betriebszeit der landwirtschaftlichen Maschine.

In der nachfolgenden Beschreibung werden gleiche Bezugszeichen für gleiche Gegenstände verwendet.

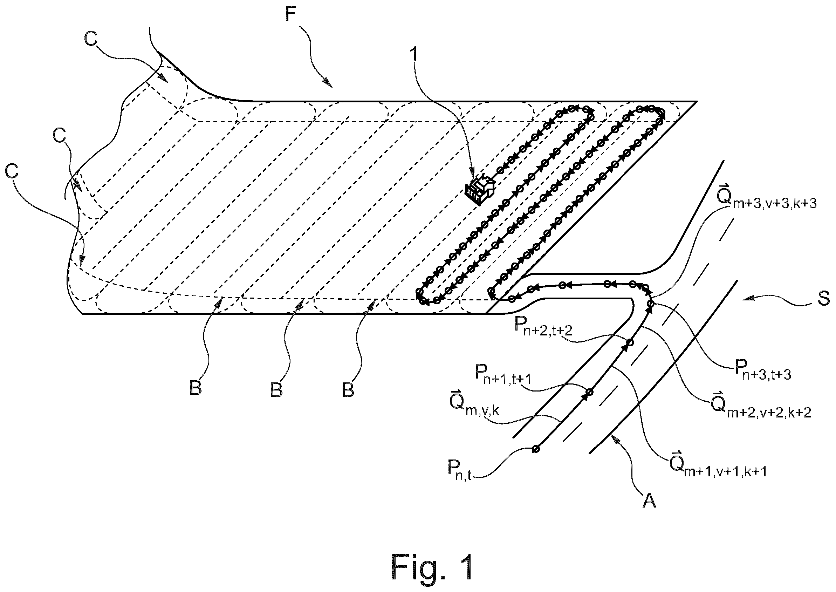

Figur 1 zeigt eine schematische Darstellung einer Karte mit einem Feld F und einer Straße S, auf denen eine landwirtschaftliche Maschine 1 in Betrieb ist.

Genauer geschildert, dient Figur 1 dem besseren Verständnis eines Verfahrens zur Erkennung des aktuellen Zustandes der landwirtschaftlichen Maschine 1. Mithilfe des nachstehend vorgestellten Verfahrens kann ein Landwirt Vorschriften und Auflagen exakt erfüllen sowie Optimierungen für seinen Betrieb gestalten.

Zu diesen Vorschriften und Optimierungsaufgaben zählen beispielsweise eine Dokumentationspflicht des Landwirts für ausgebrachtes Streugut sowie eine Optimierung von Maschinenbewegungen auf z. B. einem Feld, um Treibstoff und/oder Saatgut und/oder Streugut und/oder Dünger zu sparen.

Des Weiteren ist ein Hersteller von landwirtschaftlichen Maschinen darauf bedacht, diese optimal für den jeweiligen Landwirt zu gestalten oder auch Ersatzteile kurzfristig zur Verfügung zu stellen, um den Betrieb des Landwirts nicht oder nur minimal zu stören. Dazu werden z. B. Daten für die Beanspruchung eines Fahrwerks und/oder die Rückmeldung einer landwirtschaftlichen Maschine für bevorstehende Ausfälle von Teilen und/oder Baugruppen erhoben, um diese beispielsweise vor dem endgültigen Verschleiß rechtzeitig zu ersetzen.

Gemäß Figur 1 wird als Verfahrensschritt des Verfahrens zunächst für die landwirtschaftliche Maschine 1, ein Erfassen von Positionsdaten P_{n,t}, P_{n+1,t+1}, ... eines globalen Navigationssatellitensystems samt zugehöriger Zeitpunkte kontinuierlich und im Betrieb der landwirtschaftlichen Maschine 1 durchgeführt.

Um eine hohe Genauigkeit zu erreichen, wird das Erfassen mehrmals pro Sekunde, z. B. wenigstens 30 mal pro Sekunde, durchgeführt.

Dabei geben die Positionsdaten P_{n,t}, P_{n+1,t+1}, ... die Positionen n der landwirtschaftlichen Maschine 1 zu den zugehörigen Zeitpunkten t wieder. Die Positionsdaten P_{n,t}, P_{n+1,t+1}, ... umfassen Koordinaten n in zwei Raumrichtungen.

Danach werden die erfassten Positionsdaten P_{n,t}, P_{n+1,t+1}, ... samt den zugehörigen Zeitpunkten t in einem Speicher gespeichert.

In einem weiteren Verfahrensschritt werden die gespeicherten Positionsdaten P_{n,t}, P_{n+1,t+1}, ... samt den zugehörigen Zeitpunkten t aus dem Speicher für einen festlegbaren Zeitraum ausgelesen, um alle Positionsdaten P_{n,t}, P_{n+1,t+1}, ... samt den zugehörigen Zeitpunkten im festlegbaren Zeitraum weiterzuverarbeiten. Der festlegbare Zeitraum umfasst im vorliegenden Ausführungsbeispiel eine Zeitspanne von 7 Minuten. Diese reichen z. B. aus, um in Figur 1 ein Viertel der Strecke von einer Feldseite zur anderen zu bewältigen.

Hieraufhin werden Zustandsvektoren Q_{m,v}, Q_{m+1,v+1} ... erstellt, um die relative Positionsveränderung m und die Fahrtgeschwindigkeit v der landwirtschaftlichen Maschine 1 zu beschreiben.

Dabei umfasst jeder Zustandsvektor Q_{m,v}, Q_{m+1,v+1} ... mehrere Komponenten; unter anderem eine erste Komponente m für die relative Positionsveränderung und eine zweite Komponente v für die Fahrtgeschwindigkeit.

Die erste Komponente m jedes Zustandsvektors Q_{m,v}, Q_{m+1,v+1} ... wird aus zwei ausgelesenen Positionsdaten P_{n,t}, P_{n+1,t+1} errechnet, die zeitlich unmittelbar aufeinanderfolgend erfasst wurden. Dabei wird die erste Komponente m jedes Zustandsvektors Q_{m,v}, Q_{m+1,v+1} ... errechnet, indem die Differenz der Koordinaten der zwei ausgelesenen Positionsdaten P_{n,t}, P_{n+1,t+1} gebildet wird. Anders ausgedrückt, umfassen die zwei ausgelesenen Positionsdaten P_{n,t}, P_{n+1,t+1} zugehörige Zeitpunkte t, t+1, die zeitlich unmittelbar aufeinanderfolgen.

Die zweite Komponente v jedes Zustandsvektors Q_{m,v}, Q_{m+1,v+1} ... wird aus zugehörigen Zeitpunkten, die zeitlich unmittelbar aufeinanderfolgen, der zwei für die relative Positionsveränderung m ausgelesenen Positionsdaten P_{n,t}, P_{n+1,t+1} der ersten Komponente m jedes Zustandsvektors Q_{m,v}, Q_{m+1,v+1} ... errechnet.

Ferner wird die zweite Komponente v jedes Zustandsvektors Q_{m,v}, Q_{m+1,v+1} ... errechnet, indem der Betrag der ersten Komponente m des Zustandsvektors Q_{m,v}, Q_{m+1,v+1} ... bzw. indem der Betrag der für die relative Positionsveränderung m ausgelesenen Positionsdaten P_{n,t}, P_{n+1,t+1} der ersten Komponente m durch die Zeitdifferenz der zugehörigen Zeitpunkte t, t+1 zu den zwei ausgelesenen Positionsdaten P_{n,t}, P_{n+1,t+1} der ersten Komponente v des Zustandsvektors Q_{m,v} geteilt wird. Vereinfacht dargestellt, wird die Länge eine Vektors, der zwei Positionen oder Koordinaten miteinander verbindet, durch die Zeit geteilt, die die landwirtschaftliche Maschine 1 benötigt hat, um von einer Position P_{n,t} zur anderen P_{n+1,t+1} zu gelangen. Somit wird also die Geschwindigkeit v errechnet.

Des Weiteren wird eine Krümmung aus der Zusammenschau erstellter Zustandsvektoren Q_{m,v}, Q_{m+1,v+1} ... berechnet.

Beim Berechnen einer Krümmung wir anhand von festlegbaren Parametern wenigstens für zwei oder mehr aufeinanderfolgende Zustandsvektoren Q_{m,v}, Q_{m+1,v+1} ... auf eine Geradeausfahrt oder auf eine Kurvenfahrt geschlossen.

Ferner wird die berechnete Krümmung zu jedem einzelnen, erstellten Zustandsvektor Q_{m,v,k}, Q_{m+1,v+1,k+1} ... zugeordnet. So weist also jeder erstellte Zustandsvektor Q_{m,v,k}, Q_{m+1,v+1,k+1} ... eine dritte Komponente k für die berechnete Krümmung auf.

Dabei umfasst die dritte Komponente k jeweils einen Wert für die Geradeausfahrt und/oder für die Krümmung, wobei die dritte Komponente k eine positive Krümmung, z. B. eine Linkskurve oder eine Rechtskurve, und/oder eine negative Krümmung, z. B. eine Rechtskurve oder eine Linkskurve, aufweist.

Eine skalare Größe beschreibt den Wert des Radius des Krümmungskreises der Krümmung k, wobei je kleiner die skalare Größe ist, desto kleiner ist der Radius.

Ferner beschreibt z. B. ein positives Vorzeichen eine positive Krümmung und ein negatives Vorzeichen eine negative Krümmung, wobei eine Null als skalare Größe eine Geradeausfahrt kennzeichnet.

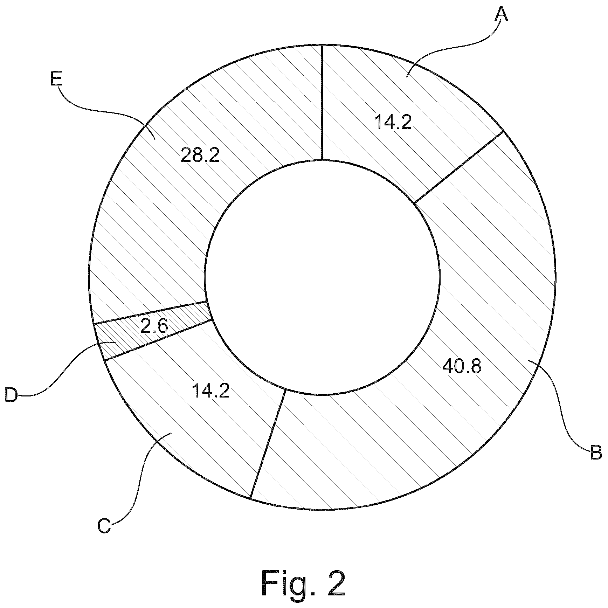

Abschließend wird klassifiziert. Hierbei zeigt Figur 2 eine graphisch aufbereitete Ansicht von prozentualen Anteilen an der gesamten Betriebszeit der landwirtschaftlichen Maschine 1.

Gemäß Figur 2 wird das Klassifizieren der erstellten Zustandsvektoren Q_{m,v,k}, Q_{m+1,v+1,k+1} anhand der Krümmung k, anhand der Fahrtgeschwindigkeit v und anhand der Positionsdaten n in nachstehende Klassen durchgeführt:
a. landwirtschaftliche Maschine 1 auf einer Straße A, im vorliegenden Beispiel mit einem Anteil von 14,2 Prozent an der gesamten Betriebszeit der landwirtschaftlichen Maschine 1,
b. landwirtschaftliche Maschine 1 auf einem Feld B, im vorliegenden Beispiel mit einem Anteil von 40,8 Prozent an der gesamten Betriebszeit der landwirtschaftlichen Maschine 1,
c. landwirtschaftliche Maschine 1 auf einem Vorgewende eines Feldes C, im vorliegenden Beispiel mit einem Anteil von 14,2 Prozent an der gesamten Betriebszeit der landwirtschaftlichen Maschine 1,
d. landwirtschaftliche Maschine 1 auf einem Hof D, im vorliegenden Beispiel mit einem Anteil von 2,6 Prozent an der gesamten Betriebszeit der landwirtschaftlichen Maschine 1, und
e. landwirtschaftliche Maschine 1 ist gestoppt E, im vorliegenden Beispiel mit einem Anteil von 28,2 Prozent an der gesamten Betriebszeit der landwirtschaftlichen Maschine 1.

Dabei können zusätzlich beim Klassifizieren Kartendaten einbezogen werden, in welchen Positionsdaten oder Koordinaten für Straßen, für Felder und/oder für Höfe gespeichert sind, sodass das Klassifizieren erleichtert werden kann und/oder die klassifizierten Zustandsvektoren Q_{m,v,k}, Q_{m+1,v+1,k+1} überprüfbar sind und/oder das Klassifizieren mit weniger Rechenaufwand, z. B. für eine Recheneinheit, durchgeführt werden kann.

Grundsätzlich kann noch festgehalten werden, dass das Klassifizieren von einer künstlichen Intelligenz oder von einem Maschinenlern-Modell oder von einem Maschinenlern-Algorithmus durchgeführt werden kann. So kann die künstliche Intelligenz oder das Maschinenlern-Modell oder der Maschinenlern-Algorithmus dazu eingerichtet sein, auf Basis der erstellten Zustandsvektoren Q_{m,v,k}, Q_{m+1,v+1,k+1} und auf Basis von Trainingsdaten die erstellten Zustandsvektoren Q_{m,v,k}, Q_{m+1,v+1,k+1} in vorgenannte Klassen a. bis e. zu unterteilen.

Anschließend können die klassifizierten Zustandsvektoren Q_{m,v,k}, Q_{m+1,v+1,k+1} ... mit Abweichungen innerhalb eines festlegbaren Toleranzbereichs zu einem einzigen Vektor zusammengefasst werden, sodass die Summe von zusammengefassten Zustandsvektoren Speicherplatz spart.

Anschließend weist das Verfahren noch als weiteren Schritt eine Auswertung der Anteile der einzelnen Klassen an der gesamten Betriebszeit der landwirtschaftlichen Maschine 1 auf.

Anhand der Auswertung findet eine Ausgabe und/oder eine Erinnerung an eine Wartung von verschleißbehafteten Teilen und/oder Baugruppen der landwirtschaftlichen Maschine 1 statt. Auch ist anhand der Auswertung, eine Vorhersage des Verschleißes von Teilen und/oder Baugruppen der landwirtschaftlichen Maschine 1 möglich. Ferner ist auch anhand der Auswertung, eine Neuauslegung von verschleißbehafteten Teilen und/oder Baugruppen der landwirtschaftlichen Maschine 1, z. B. für einen Hersteller von landwirtschaftlichen Maschinen, möglich.

Es wird noch angemerkt, dass ein Computer, ein Computersystem oder ein Computernetzwerk dazu eingerichtet sein kann, lokal oder nicht-lokal das oben vorgestellte Verfahren auszuführen. Auch kann ein Computerprogramm Befehle umfassen, die bei der Ausführung des Programms durch einen Computer diesen veranlassen, das oben vorgestellte Verfahren auszuführen.

Selbstverständlich kann auch eine landwirtschaftliche Maschine 1, wie z. B. eine Sämaschine oder eine Erntemaschine oder ein Feldspritze oder eine Streumaschine oder eine Bodenbearbeitungsmaschine zum Ausführen des oben geschilderten Verfahrens ausgebildet sein. Auch kann eine landwirtschaftliche Maschine 1, wie z. B. eine Sämaschine oder eine Erntemaschine oder ein Feldspritze oder eine Streumaschine oder eine Bodenbearbeitungsmaschine einen Computer, ein Computersystem oder ein Computernetzwerk, wie erwähnt, aufweisen, oder zur Ausführung eines Computerprogramms, wie erwähnt, ausgebildet sein.

### Bezugszeichenliste

- 1: landwirtschaftliche Maschine

- P_{n,t}: Positionsdaten samt zugehörigen Zeitpunkt
- n: Koordinaten / Positionsdaten
- t: Zeitpunkt

- Q_{m,v,k}: Zustandsvektor
- m: erste Komponente für die relative Positionsveränderung / relative Positionsveränderung
- v: zweite Komponente für die Fahrtgeschwindigkeit / Fahrtgeschwindigkeit
- k: dritte Komponente für die berechnete Krümmung / Krümmung

- A: landwirtschaftliche Maschine auf einer Straße
- B: landwirtschaftliche Maschine auf einem Feld
- C: landwirtschaftliche Maschine auf einem Vorgewende eines Feldes
- D: landwirtschaftliche Maschine auf einem Hof
- E: landwirtschaftliche Maschine ist gestoppt

- F: Feld
- S: Straße

## Patentansprüche

1. Verfahren zur Erkennung des aktuellen Zustandes einer landwirtschaftlichen Maschine (1) aufweisend:
- Erfassen von sich auf die Position der landwirtschaftlichen Maschine (1) beziehende Positionsdaten (P_{n,t}, P_{n+1,t+1}, ...) eines globalen Navigationssatellitensystems (GNSS) samt zugehöriger Zeitpunkte, vorzugsweise mittels einer Empfängereinheit,
- Speichern der erfassten Positionsdaten (P_{n,t}, P_{n+1,t+1}, ...) samt den zugehörigen Zeitpunkten (t) in einem Speicher,
- Auslesen gespeicherter Positionsdaten (P_{n,t}, P_{n+1,t+1}, ...) samt den zugehörigen Zeitpunkten (t) aus dem Speicher mittels einer Recheneinheit,
- Erstellen von Zustandsvektoren (Q_{m,v}, Q_{m+1,v+1} ...) mittels der Recheneinheit, um die relative Positionsveränderung (m) und die Fahrtgeschwindigkeit (v) der landwirtschaftlichen Maschine (1) zu beschreiben,
- Klassifizieren der erstellten Zustandsvektoren (Q_{m,v,k}, Q_{m+1,v+1,k+1} ...) in nachstehende Klassen mittels der Recheneinheit:
a. landwirtschaftliche Maschine auf einer Straße (A),
b. landwirtschaftliche Maschine auf einem Feld (B),
c. landwirtschaftliche Maschine auf einem Vorgewende eines Feldes (C),
d. landwirtschaftliche Maschine auf einem Hof (D), und
e. landwirtschaftliche Maschine ist gestoppt (E).

2. Verfahren nach Anspruch 1,
**dadurch gekennzeichnet, dass** die Recheneinheit bei der Klassifizierung, wonach sich die landwirtschaftliche Maschine auf einer Straße (A) befindet, die Aktivierung von einer oder mehreren Sicherheitsfunktionen der landwirtschaftlichen Maschine (1) veranlasst.

3. Verfahren nach Anspruch 1 oder 2,
**dadurch gekennzeichnet, dass** die Recheneinheit bei der Klassifizierung, wonach sich die landwirtschaftliche Maschine auf einem Feld (B) befindet, untersucht, ob sich die landwirtschaftliche Maschine in einer Feldeinfahrt befindet.

4. Verfahren nach einem der vorstehenden Ansprüche,
**dadurch gekennzeichnet, dass** die landwirtschaftliche Maschine (1) eine Pflanzenschutzspritze ist und
- die Recheneinheit auf Grundlage einer Klassifizierung ein Anheben oder Absenken des Gestänges veranlasst; und/oder
- die Recheneinheit auf Grundlage einer Klassifizierung eine Verstärkung oder Verringerung der Gestängedämpfung veranlasst; und/oder
- die Recheneinheit auf Grundlage einer Klassifizierung eine Anpassung der Förderung von Ausbringflüssigkeit veranlasst.

5. Verfahren nach einem der vorstehenden Ansprüche,
**dadurch gekennzeichnet, dass** die landwirtschaftliche Maschine (1) ein Düngerstreuer ist und
- die Recheneinheit auf Grundlage einer Klassifizierung die Einstellung eines geeigneten Streumodus veranlasst; und/oder
- die Recheneinheit auf Grundlage einer Klassifizierung das Aktivieren oder Deaktivieren einer Windkorrektur veranlasst; und/oder
- die Recheneinheit auf Grundlage einer Klassifizierung eine Anpassung der Aufgabemenge an Streugut und/oder des Aufgabepunkts des Streuguts auf die Streuscheiben und/oder der Drehzahl der Streuscheiben veranlasst.

6. Verfahren nach einem der vorstehenden Ansprüche,
**dadurch gekennzeichnet, dass** die landwirtschaftliche Maschine (1) eine Sämaschine ist und die Recheneinheit auf Grundlage einer Klassifizierung eine Anpassung des Schardrucks der Säschare veranlasst.

7. Verfahren nach einem der vorstehenden Ansprüche,
**dadurch gekennzeichnet, dass** die landwirtschaftliche Maschine (1) ein Pflug ist und die Recheneinheit auf Grundlage einer Klassifizierung das Wenden des Pflugs veranlasst.

8. Verfahren nach einem der vorstehenden Ansprüche,
**dadurch gekennzeichnet, dass** das Klassifizieren der erstellten Zustandsvektoren (Q_{m,v,k}, Q_{m+1,v+1,k+1} ...) anhand der Fahrtgeschwindigkeit (v) und/oder anhand der Positionsveränderung (P_{n,t}, P_{n+1,t+1}, ...) und/oder anhand der Positionsdaten (n) und/oder anhand einer erste, zweiten und/oder dritten Komponente (m, v, k) der erstellten Zustandsvektoren (Q_{m,v,k}, Q_{m+1,v+1,k+1} ...) erfolgt.

9. Verfahren nach einem der vorstehenden Ansprüche,
**gekennzeichnet durch** die Schritte:
- Berechnen einer Krümmung aus der Zusammenschau erstellter Zustandsvektoren (Qm,v, Qm+1,v+1 ...),Zuordnen der berechneten Krümmung zu jedem einzelnen, erstellten Zustandsvektor (Q_{m,v,k}, Q_{m+1,v+1,k+1} ...),
wobei das Klassifizieren der erstellten Zustandsvektoren (Q_{m,v,k}, Q_{m+1,v+1,k+1} ...) anhand der Krümmung (k) erfolgt.

10. Verfahren nach einem der vorstehenden Ansprüche,
- wobei beim Auslesen Positionsdaten (P_{n,t}, P_{n+1,t+1}, ...) samt den zugehörigen Zeitpunkten für einen festlegbaren Zeitraum ausgelesen werden, um alle Positionsdaten (P_{n,t}, P_{n+1,t+1}, ...) samt den zugehörigen Zeitpunkten im festlegbaren Zeitraum weiterzuverarbeiten.

11. Verfahren nach einem der vorstehenden Ansprüche,
- wobei jeder Zustandsvektor (Q_{m,v}, Q_{m+1,v+1} ...) eine erste Komponente (m) für die relative Positionsveränderung und eine zweite Komponente (v) für die Fahrtgeschwindigkeit aufweist,
und/oder
- wobei die erste Komponente (m) jedes Zustandsvektors (Q_{m,v}, Q_{m+1,v+1} ...) aus zwei ausgelesenen Positionsdaten (P_{n,t}, P_{n+1,t+1}, ...) errechnet wird.

12. Verfahren nach einem der vorangehenden Ansprüche,
- wobei die zweite Komponente (v) jedes Zustandsvektors (Q_{m,v}) aus zugehörigen Zeitpunkten der zwei für die relative Positionsveränderung (m) ausgelesenen Positionsdaten (P_{n,t}, P_{n+1,t+1}, ...) der ersten Komponente (m) jedes Zustandsvektors (Q_{m,v}, Q_{m+1,v+1} ...) errechnet wird,
und/oder
- wobei die zweite Komponente (v) jedes Zustandsvektors (Q_{m,v}, Q_{m+1,v+1} ...) errechnet wird, indem der Betrag der ersten Komponente (m) des Zustandsvektors (Q_{m,v}, Q_{m+1,v+1} ...) bzw. indem der Betrag der für die relative Positionsveränderung (m) ausgelesenen Positionsdaten (P_{n,t}, P_{n+1,t+1}, ...) der ersten Komponente (m) durch die Zeitdifferenz der zugehörigen Zeitpunkte ((t+1) - t) zu den zwei ausgelesenen Positionsdaten (P_{n,t}, P_{n+1,t+1}, ...) der ersten Komponente (v) des Zustandsvektors (Q_{m,v}, Q_{m+1,v+1} ...) geteilt wird.

13. Verfahren nach einem der vorangehenden Ansprüche,
- wobei jeder erstellte Zustandsvektor (Q_{m,v,k}, Q_{m+1,v+1,k+1} ...) eine dritte Komponente (k) für die berechnete Krümmung aufweist, und
- wobei die dritte Komponente (k) jeweils einen Wert für die Geradeausfahrt und/oder für die Krümmung umfasst.

14. Verfahren nach einem der vorangehenden Ansprüche,
- wobei das Klassifizieren von einer künstlichen Intelligenz oder von einem Maschinenlern-Modell oder von einem Maschinenlern-Algorithmus durchgeführt wird.

15. Verfahren nach einem der vorangehenden Ansprüche, ferner folgenden Schritt aufweisend:
- Auswertung der Anteile der einzelnen Klassen an der gesamten Betriebszeit einer landwirtschaftlichen Maschine (1),
a. anhand der Auswertung, Ausgabe und/oder Erinnerung an eine Wartung von verschleißbehafteten Teilen und/oder Baugruppen der landwirtschaftlichen Maschine (1), und/oder
b. anhand der Auswertung, Vorhersage des Verschleißes von Teilen und/oder Baugruppen der landwirtschaftlichen Maschine (1), und/oder
c. anhand der Auswertung, Neuauslegung von verschleißbehafteten Teilen und/oder Baugruppen der landwirtschaftlichen Maschine (1).
